# EUROPÄISCHE PATENTSCHRIFT

(11) **EP 1 356 978 B1**
(45) Veröffentlichungstag und Bekanntmachung des Hinweises auf die Patenterteilung: **16.03.2005**
(21) Anmeldenummer: 02027836.2
(22) Anmeldetag: 12.12.2002
(51) Int. Cl.: B60K 31/00

(54) **Verfahren zur Geschwindigkeits- und Abstandsregelung bei Kraftfahrzeugen**
Method for cruise control and/or regulation of vehicle spacing
Procédé de régulation de vitesse et/ou régulation de la distance entre deux véhicules

(30) Priorität: 23.04.2002 DE 10218017
(43) Veröffentlichungstag der Anmeldung: 29.10.2003
(73) Patentinhaber: ROBERT BOSCH GMBH, 70442 Stuttgart (DE)
(72) Erfinder: Michi, Harald, 75248 Oelbronn-Duerrn (DE); Scherl, Michael, 71679 Asperg (DE); Weilkes, Michael, 74343 Sachsenheim (DE)

(56) Entgegenhaltungen:
- EP-A- 0 992 387
- DE-A- 19 704 890
- DE-A- 19 958 520
- US-A1- 2002 018 003

## Beschreibung

Die Erfindung betrifft ein Verfahren zur Geschwindigkeits-und Abstandsregelung bei Kraftfahrzeugen, bei dem der Abstand eines vorausfahrenden Fahrzeugs gemessen wird und für die Abstandsregelung mindestens zwei Betriebsmodi vorgesehen sind, die in verschiedenen, einander überlappenden Geschwindigkeitsbereichen aktivierbar sind, und bei dem die Umschaltung zwischen diesen Betriebsmodi zumindest in einer Richtung nur durch einen Fahrerbefehl möglich ist.

### Stand der Technik

In DE 19958520 wird ein Verfahren zur Geschwindigkeits- und Abstandsregelung nach dem Oberbegriff des ersten Anspruchs beschrieben.

Für Kraftfahrzeuge sind Geschwindigkeitsregler bekannt, die es ermöglichen, die Geschwindigkeit des Fahrzeugs auf eine vom Fahrer gewählte Wunschgeschwindigkeit zu regeln. Wenn das Fahrzeug mindestens einen Abstandssensor aufweist, beispielsweise in der Form eines Radarsensors, eines Stereo-Kamerasystems oder dergleichen, kann die Fahrzeuggeschwindigkeit auch so geregelt werden, daß automatisch ein geeigneter Sicherheitsabstand zu einem vorausfahrenden Fahrzeug eingehalten wird. Ein Beispiel eines solchen Regelsystems, das auch als ACC-System (Adaptive Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996.

Da jedoch mit den verfügbaren Sensoreinrichtungen eine vollständige Erfassung und sichere Bewertung des Verkehrsumfeldes noch nicht möglich ist, eignen sich diese Systeme bisher vor allem für relativ stabile Verkehrssituationen wie z.B. das Fahren auf einer Autobahn oder Schnellstraße. Im innerstädtischen Verkehr oder bei Fahrten mit niedriger Geschwindigkeit auf kurvenreichen Strecken könnten dagegen die Unsicherheiten bei der Erfassung des jeweils relevanten Zielobjektes zu einem Unfallrisiko führen. Aus diesem Grund sind bekannte ACC-Systeme bisher so ausgelegt, daß sie sich nur oberhalb einer bestimmten Grenzgeschwindigkeit aktivieren lassen.

Es ist bereits vorschlagen worden, den Anwendungsbereich des ACC-Systems auf eine Verkehrssituation zu erweitern, die als Stop & Go Verkehr bezeichnet wird und die beispielsweise bei einem Verkehrsstau oder bei zähflüssigem Verkehr auftritt. Auch diese Verkehrssituation ist relativ stabil und eignet sich daher für eine automatische Abstandsregelung. Allerdings muß die Funktionalität so erweitert werden, daß auch Anfahr- und Anhaltevorgänge automatisch gesteuert werden können.

Außerdem sollte der Anwendungsbereich dieser Stop & Go Funktion auf Geschwindigkeiten unterhalb eines bestimmten Wertes begrenzt werden, wobei sich die Geschwindigkeitsbereiche für die ACC-Funktion und Stop & Go Funktion überlappen können.

Da sich die Regelalgorithmen in dem für hohe Fahrgeschwindigkeiten ausgelegten ACC-Modus und dem für niedrige Fahrgeschwindigkeiten ausgelegten Stop & Go Modus von einander unterscheiden, ist es zweckmäßig, den Übergang zwischen diesen beiden Modi nicht automatisch vorzunehmen, sondern von einem vom Fahrer einzugebenden Befehl abhängig zu machen, damit das Verhalten des Gesamtsystems für den Fahrer transparent bleibt.

In EP-A-0 992 387 wird ein Regelverfahren beschrieben, bei dem ein Stop & Go Modus nur unter bestimmten Bedingungen aktiviert werden kann. Eine dieser Bedingungen besteht darin, daß die Fahrgeschwindigkeit des eigenen Fahrzeugs unterhalb einer vorgebbaren Grenzgeschwindigkeit liegt. Wenn die Bedingungen für den Stop & Go Modus erfüllt sind, geht das System zunächst in einen Bereitschaftszustand, der dem Fahrer angezeigt wird und sich somit für den Fahrer als eine Aufforderung darstellt, den Stop & Go Modus zu aktivieren. Wenn die Bedingungen für eine Regelung im Stop & Go Modus nicht mehr erfüllt sind, beispielsweise weil das als Zielobjekt verfolgte Fahrzeug vorübergehend aus dem Ortungsbereich des Abstandssensors verlorengeht, so geht das System in einen als "Ausrollmodus" bezeichneten Modus, in dem die Fahrzeuggeschwindigkeit mit mäßiger Verzögerung reduziert wird. Der Fahrer kann dann entweder durch Eingabe eines Abschaltbefehls die Regelung ganz abschalten oder, sofern die Bedingungen wieder erfüllt sind, wieder in den Stop & Go Modus zurückschalten. Weiterhin hat der Fahrer die Möglichkeit, in den normalen Regelmodus (ACC) umzuschalten, sofern die Bedingungen hierfür erfüllt sind.

### Aufgabe, Lösung und Vorteile der Erfindung

Aufgabe der Erfindung ist es, ein Verfahren anzugeben, das eine situationsgerechte Umschaltung vom aktuellen Funktionsmodus in einen anderen Funktionsmodus erleichtert.

Diese Aufgabe wird erfindungsgemäß dadurch gelöst, daß die Geschwindigkeit des vorausfahrenden Fahrzeugs anhand der Geschwindigkeit des eigenen Fahrzeugs und der gemessenen Abstands- und/oder Relativgeschwindigkeitsdaten in die Zukunft extrapoliert wird und daß eine Umschalzaufforderung an den Fahrer ausgegeben wird, wenn die extrapolierte Geschwindigkeit außerhalb des zulässigen Bereichs für den aktuellen Modus liegt und die aktuelle Geschwindigkeit innerhalb des zulässigen Bereichs für einen anderen Modus liegt.

Wenn die Fahrgeschwindigkeit in dem Überlappungsbereich liegt, in dem im Prinzip beide Regelmodi aktivierbar sind, so wird erfindungsgemäß, gleichsam "vorausschauend", anhand der Bewegungen des vorausfahrenden Fahrzeugs geprüft, ob damit zu rechnen ist, daß demnächst der zulässige Geschwindigkeitsbereich für den aktuellen Modus verlassen wird, und der Fahrer wird durch die Umschaltaufforderung dazu veranlaßt, den Umschaltbefehl einzugeben, bevor die Grenzgeschwindigkeit tatsächlich erreicht wird. Auf diese Weise läßt sich vermeiden, daß es bei Erreichung der Grenzgeschwindigkeit zu einer Systemreaktion kommt, die für den Fahrer oder für das Verkehrsumfeld irritierend wäre.

Wenn beispielsweise im Stop & Go Modus ein vorausfahrendes Fahrzeug verfolgt wird und dann das vorausfahrende Fahrzeug stark und anhaltend beschleunigt, so ist absehbar, daß das vorausfahrende Fahrzeug alsbald die Grenzgeschwindigkeit für den Stop & Go Modus überschreiten wird. Das Regelsystem wird mit einer Beschleunigung des eigenen Fahrzeugs reagieren, um den Abstand oder, genauer, die Zeitlücke (Abstand dividiert durch Absolutgeschwindigkeit) zum vorausfahrenden Fahrzeug zu halten. Ohne Eingriff des Fahrers würde diese Beschleunigung jedoch unterbrochen, sobald die zulässige Grenzgeschwindigkeit für den Stop & Go Modus, beispielsweise 50 km/h, erreicht ist. Es würde dann eine geraume Zeit dauern, bis der Fahrer bemerkt, daß sich der Abstand zum vorausfahrenden Fahrzeug vergrößert hat und bis er hierauf angemessen reagiert, etwa indem er in den ACC-Modus umschaltet oder indem er mit Hilfe des Gaspedals selbst die Kontrolle übernimmt. Um den Verkehrsfluß nicht unnötig zu behindern, müßte der Fahrer dann versuchen, den Abstand zum vorausfahrenden Fahrzeug durch entsprechend höhere Beschleunigung wieder aufzuholen. Dies würde zu einer unstetigen Fahrweise und einem erhöhten Kraftstoffverbrauch führen. Erfindungsgemäß wird deshalb der Fahrer bereits durch die Umschaltaufforderung auf diese Situation vorbereitet, so daß er rechtzeitig reagieren kann und es erst gar nicht zu übermäßigen Zunahme des Abstands zum vorausfahrenden Fahrzeug kommt.

Vorteilhafte Ausgestaltungen der Erfindung ergeben sich aus den Unteransprüchen.

Die künftige Geschwindigkeit des eigenen Fahrzeugs kann anhand der Absolutgeschwindigkeit des vorausfahrenden Fahrzeugs bestimmt werden. Wenn der Abstandssensor ein Radarsensor ist, der eine direkte Messung der Relativgeschwindigkeit des vorausfahrenden Fahrzeugs ermöglicht, läßt sich die Absolutgeschwindigkeit des vorausfahrenden Fahrzeugs bestimmen, indem die gemessene Relativgeschwindigkeit zu der bekannten Absolutgeschwindigkeit des eigenen Fahrzeugs addiert wird.

Bevorzugt wird auch die Geschwindigkeit des vorausfahrenden Fahrzeugs noch in die Zukunft extrapoliert. Dies geschieht im einfachsten Fall dadurch, daß die zeitliche Ableitung der Absolutgeschwindigkeit gebildet und mit einem vorgebbaren Zeitintervall multipliziert wird und dann das Produkt zur aktuellen Absolutgeschwindigkeit addiert wird. Verfeinerungen sind etwa dadurch möglich, daß höhere Ableitungen der Absolutgeschwindigkeit (also etwa eine zeitliche Änderung der Beschleunigung) berücksichtigt werden und/oder daß die Länge des für die Extrapolation benutzten Zeitintervalls situationsabhängig variiert wird, beispielsweise in Abhängigkeit von der Eigengeschwindigkeit des Fahrzeugs.

Es versteht sich, daß dieses Verfahren nicht nur für den Übergang vom Stop & Go Modus auf den ACC-Modus, sondern auch für den Übergang von Stop & Go Modus auf Handsteuerung oder - bei Unterschreitung einer zulässigen unteren Grenzgeschwindigkeit für den ACC-Modus - auch für den Übergang vom ACC-Modus auf den Stop & Go Modus anwendbar ist.

Die Umschaltaufforderung kann beispielsweise optisch, durch Aufleuchten oder Blinken einer Lampe auf dem Armaturenbrett und wahlweise oder zusätzlich auch akustisch erfolgen.

In einer bevorzugten Ausführungsform wird auf der Instrumententafel des Fahrzeugs durch geeignete Anzeigelampen oder Symbole angezeigt, welcher Regelmodus derzeit aktiv ist, und zusätzlich, welcher Modus derzeit aktivierbar ist. Die erfindungsgemäße Umschaltaufforderung läßt sich zweckmäßig in dieses Anzeigekonzept integrieren.

### Zeichnung

Im folgenden werden Ausführungsbeispiele der Erfindung an der Zeichnung erläutert.

Es zeigen:
Figur 1 ein Blockdiagramm eines Geschwindigkeitsreglers und zugehöriger Bedienungs- und Anzeigeelemente;
Figur 2 ein Diagramm zur Erläuterung von Geschwindigkeitsbereichen, in denen verschiedene Funktionen des Geschwindigkeitsreglers anwendbar sind;
Figur 3ein Geschwindigkeits/Zeit-Diagramm zur Erläuterung des erfindungsgemäßen Verfahrens;
Figur 4 ein Flußdiagramm zur Erläuterung des Verfahrens, und
Figur 5 eine Anzeigeeinrichtung, die in einen Fahrgeschwindigkeitsanzeiger auf dem Armaturenbrett des Kraftfahrzeugs integriert ist.

### Beschreibung von Ausführungsbeispielen

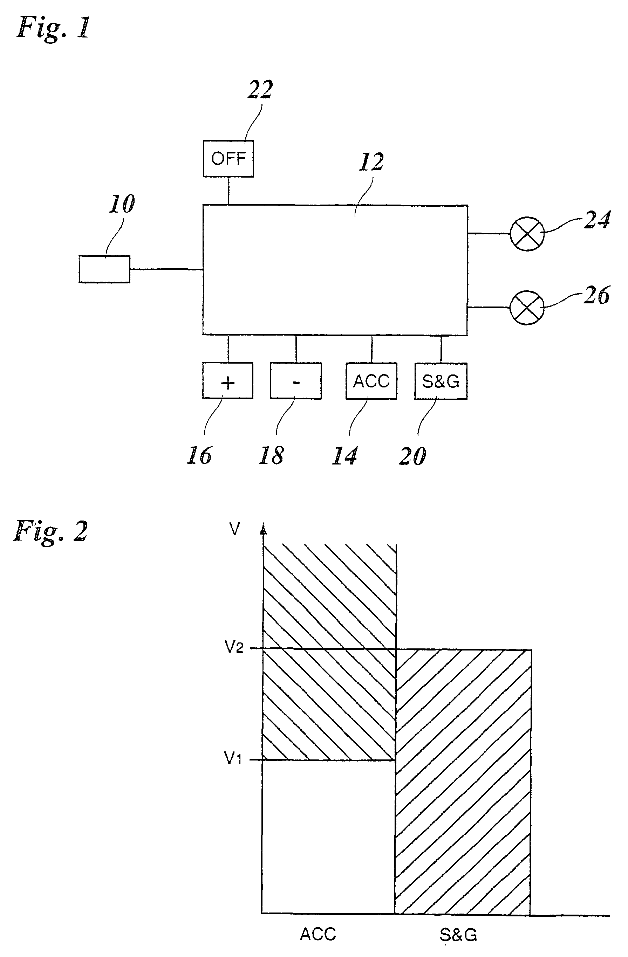

Da der Aufbau und die Wirkungsweise eines Geschwindigkeitsreglers mit ACC-Funktion bekannt sind, zeigt Figur 1 lediglich die wichtigsten Komponenten in einem Blockdiagramm. Eine Sensoreinrichtung umfaßt einen Abstandssensor 10, beispielsweise einen Radarsensor, der den Abstand und die Relativgeschwindigkeit eines vorausfahrenden Fahrzeugs mißt. Sofern von dem Radarsensor mehrere Zielobjekte erfaßt werden, beispielsweise mehrere Fahrzeuge oder auch Standziele wie Straßenschilder und dergleichen, wird durch Plausibilitätsauswertung das Zielobjekt ausgewählt.

Zu der Sensoreinrichtung gehören außerdem noch bekannte Sensoren, beispielsweise einen Fahrgeschwindigkeitssensor, Beschleunigungssensoren zur Erfassung der Längsbeschleunigung und der Querbeschleunigung, ein Giergeschwindigkeitssensor und dergleichen, die ohnehin in Fahrzeug vorhanden sind und deren Signale auch für andere Regelungszwecke genutzt werden. Die Signale des Abstandssensors und der übrigen Sensoren werden in einer elektronischen Steuereinrichtung 12 ausgewertet, die beispielsweise durch einen Mikrocomputer gebildet wird. Die Steuereinrichtung 12 wirkt auf das Antriebs- und Bremssystem des Fahrzeugs ein, um die Fahrgeschwindigkeit entweder auf eine vom Fahrer gewählte Wunschgeschwindigkeit oder auf einen geeigneten Abstand zum vorausfahrenden Fahrzeug zu regeln.

Dieser Regelmodus, im folgenden als ACC-Modus bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig eine Taste 16 betätigt, nachdem das Fahrzeug die gewünschte Geschwindigkeit erreicht hat. Weitere oder anhaltende Betätigung der Taste 16 bewirkt eine schrittweise Erhöhung der Wunschgeschwindigkeit. Entsprechend bewirkt die Betätigung einer Taste 18 eine schrittweise Absenkung der Wunschgeschwindigkeit.

Der ACC-Modus schaltet sich selbsttätig aus, sobald die Geschwindigkeit des Fahrzeugs einen bestimmten Wert V₁ von beispielsweise 40 km/h unterschreitet. Sobald die Geschwindigkeit unterhalb eines größeren Wertes V₂ liegt, der beispielsweise 50 km/h beträgt, kann der Fahrer jedoch durch Betätigen einer Taste 20 einen Stop & Go Modus aktivieren. Von dieser Möglichkeit wird der Fahrer beispielsweise dann Gebrauch machen, wenn er auf ein Stauende auffährt. Der Stop & Go Modus bewirkt dann, daß das Fahrzeug automatisch in einem passenden Abstand vor dem Stauende zum Stillstand gebracht wird. Wenn das vor dem eigenen Fahrzeug haltende Fahrzeug ein Stück vor fährt, bewirkt der Stop & Go Modus, daß das eigene Fahrzeug je nach Situation entweder automatisch oder fahrergetriggert anfährt und seinerseits ein entsprechendes Stück vor fährt. Die Geschwindigkeit des eigenen Fahrzeugs wird dabei automatisch auf die Geschwindigkeit V₂ oder eine kleinere, vom Fahrer mit Hilfe der Tasten 16 und 18 gewählte Wunschgeschwindigkeit begrenzt.

Mit einer Taste 22 kann der Geschwindigkeitsregler deaktiviert werden, unabhängig davon, ob gerade der Stop & Go Modus oder der ACC-Modus aktiv ist.

Figur 2 illustriert die Geschwindigkeitsbereiche, in denen der ACC-Modus und der Stop & Go Modus aktivierbar sind. In dem Geschwindigkeitsbereich zwischen V₁ und V₂ sind beide Modi aktivierbar, doch schließen sich die beiden Modi gegenseitig aus.

Das Aufleuchten einer Anzeigelampe 24 (Figur 1) zeigt an, daß der ACC-Modus aktiv ist. Diese Anzeigelampe 26 weist einen Zwischenzustand zwischen dem eingeschalteten und dem ausgeschalteten Zustand auf. Dieser Zwischenzustand wird beispielsweise dadurch gebildet, daß die Lampe schwächer aufleuchtet, einen Farbumschlag zeigt oder daß lediglich eine Umrahmung der Lampe aufleuchtet, und zeigt an, daß der ACC-Modus aktivierbar aber nicht aktiv ist. Entsprechend zeigt ein Aufleuchten oder ein Zwischenzustand einer Anzeigelampe 26 an, daß der Stop & Go Modus aktiv bzw. aktivierbar ist.

Durch Betätigen des Gaspedals kann der Fahrer sowohl die ACC-Funktion als auch die Stop & Go Funktion übersteuern, um vorübergehend auf eine höhere Geschwindigkeit zu beschleunigen. Die Betätigung des Bremspedals hat dagegen ebenso wie die Betätigung der Taste 22 die Wirkung, daß der Geschwindigkeitsregler deaktiviert wird. Wenn der Fahrer selbst das Fahrzeug zum Stillstand abgebremst hat, kann der Stop & Go Modus nicht aus dem Stand wieder aktiviert werden, sondern erst nachdem der Fahrer selbst das Fahrzeug durch Betätigen des Gaspedals wieder in Bewegung gesetzt hat.

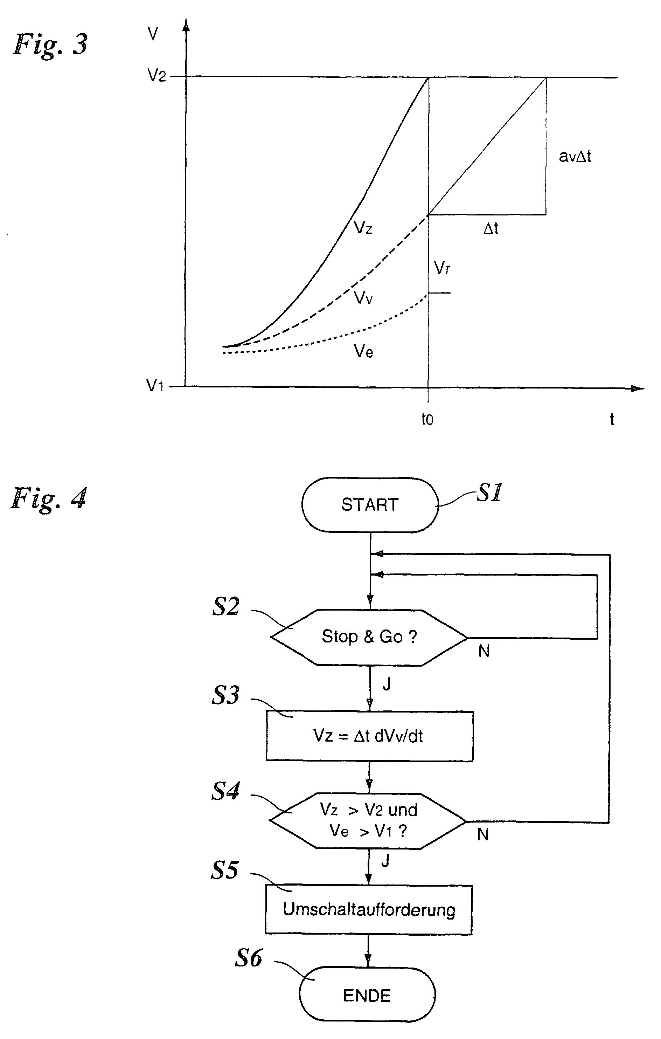

Wenn der Stop & Go Modus aktiv ist und das vorausfahrende Fahrzeug auf eine Geschwindigkeit von 50 km/h oder mehr beschleunigt, beispielsweise bei Auflösung eines Staus, so wird auch das eigene Fahrzeug beschleunigen, und sobald die Geschwindigkeit V₁ überschritten ist, geht die Anzeigelampe 24 in den Zwischenzustand. Hierdurch wird dem Fahrer angezeigt, daß er nun wieder in den ACC-Modus umschalten kann. Unterläßt der Fahrer diese Umschaltung, so wird die Geschwindigkeit des eigenen Fahrzeugs nicht über 50 km/h hinaus zunehmen. Dadurch kann es bei der Auflösung des Staus, etwa eines Staus an einer Baustellenampel, zu einer unerwünschten Behinderung des Verkehrsflusses kommen. Der Zwischenzustand der Anzeigelampe 24 informiert den Fahrer nur darüber, daß eine Umschaltung möglich ist, weist jedoch nicht mit Nachdruck auf Verkehrssituationen hin, in denen eine Umschaltung nicht nur möglich, sondern auch geboten ist. Zu diesem Zweck ist erfindungsgemäß eine besondere Umschaltaufforderung vorgesehen. Für die Entscheidung über die Ausgabe dieser Umschaltaufforderung ist in der Steuereinrichtung 12 ein Verfahren implementiert, das nachstehend anhand der Figuren 3 und 4 erläutert werden soll.

Figur 3 illustriert die Situation, daß das eigene Fahrzeug mit einer Geschwindigkeit Vₑ fährt, die zwischen den Geschwindigkeiten V₁ und V₂ liegt. Ein vorausfahrendes Fahrzeug fährt mit der Geschwindigkeit Vᵥ (Absolutgeschwindigkeit). Diese Geschwindigkeit Vᵥ wird in der Steuereinrichtung 12 berechnet, indem zu der Geschwindigkeit vₑ die vom Abstandssensor 10 gemessene Relativgeschwindigkeit Vᵣ addiert wird. Zunächst ist Vᵥ gleich Vₑ d.h., das vorausfahrende Fahrzeug wird in konstantem Abstand verfolgt. Dann jedoch wird das vorausfahrende Fahrzeug beschleunigt, so daß Vᵥ und zunächst auch Vᵣ zunehmen. Die Steuereinrichtung 12 reagiert darauf mit einer Beschleunigung des eigenen Fahrzeugs, so daß mit einer gewissen zeitlichen Verzögerung auch Vₑ zunimmt.

Die Umschaltaufforderung an den Fahrer soll ausgegeben werden, wenn absehbar ist, daß die Geschwindigkeit Vᵥ des vorausfahrenden Fahrzeugs dauerhaft über die Grenzgeschwindigkeit V₂ ansteigen wird, oberhalb derer der Stop & Go Modus nicht mehr aktiv sein kann. Bei dem hier beschriebenen Verfahren kann die Geschwindigkeit Vᵥ noch für ein bestimmtes Zeitintervall Dt in die Zukunft extrapoliert werden, durch Addition eines Terms aᵥ · Dt, mit aᵥ = Beschleunigung des vorausfahrenden Fahrzeugs. Diese Extrapolation ergibt die (voraussichtliche) zukünftige Geschwindigkeit V_{z} des eigenen Fahrzeugs. Wenn diese Geschwindigkeit V_{z} größer oder gleich der Grenzgeschwindigkeit V₂ ist, so wird die Umschaltaufforderung ausgegeben. Bei dem in Figur 3 gezeigten Beispiel ist dies erstmals zum Zeitpunkt t₀ der Fall.

Die zugehörige Entscheidungsprozedur ist in Figur 4 veranschaulicht. Mit Schritt S1 wird eine Programmroutine gestartet, die periodisch in kurzen Intervallen wiederholt wird. In Schritt S2 wird überprüft, ob der aktuelle Modus des Regelsystems der Stop & Go Modus ist. Solange dies nicht der Fall ist, wird der Schritt S2 zyklisch wiederholt. Wenn sich das System im Stop & Go Modus befindet, so wird in Schritt S3 die zukünftige Geschwindigkeit V_{z} berechnet. In Schritt S4 wird dann geprüft, ob V_{z} größer ist als V₂ und gleichzeitig Vₑ größer ist als V₁. Unter diesen Umständen ist eine Abschaltung des Stop & Go Modus und - spezieller - eine Umschaltung in den ACC-Modus nicht nur zulässig, sondern aufgrund der Verkehrssituation auch geboten. Dementsprechend wird in Schritt S5 die Umschaltaufforderung an den Fahrer ausgegeben, wonach das Programm mit Schritt S6 beendet ist. Wenn die in Schritt S4 überprüften Bedingungen nicht erfüllt sind, erfolgt ein Rücksprung zu Schritt S2.

Auf diese Weise kann der Fahrer rechtzeitig darauf hingewiesen werden, daß er den Stop & Go Modus verlassen sollte.

Sofern die Umschaltaufforderung in einer optischen Anzeige besteht, erlischt sie nach Ablauf einer vorgegebenen Zeitspanne oder spätestens dann, wenn der Fahrer durch Betätigung der Taste 14 oder der Taste 22 den Umschaltbefehl bzw. Abschaltbefehl eingibt.

Als Schwellenwert, mit dem die zukünftige Geschwindigkeit V_{z} des eigenen Fahrzeugs verglichen wird, braucht nicht unbedingt die Grenzgeschwindigkeit V₂ genommen zu werden, sondern es kann auch ein etwas höherer Schwellenwert gewählt werden. Ebenso kann es zweckmäßig sein, eine gewisse zeitliche Hysterese vorzusehen, so daß die Umschaltaufforderung erst dann ausgegeben wird, wenn der Schwellenwert (beispielsweise V₂) während einer bestimmten Zeitspanne (kleiner als Dt) dauernd überschritten wird.

Während das oben beschriebene Verfahren den Übergang vom Stop & Go Modus in den ACC-Modus betrifft, kann ein analoges Verfahren auch für den Übergang vom ACC-Modus in den Stop & Go Modus vorgesehen sein. In diesem Fall wird die Umschaltaufforderung ausgegeben, wenn die extrapolierte zukünftige Geschwindigkeit V_{z} unter die Geschwindigkeit V₁ absinkt.

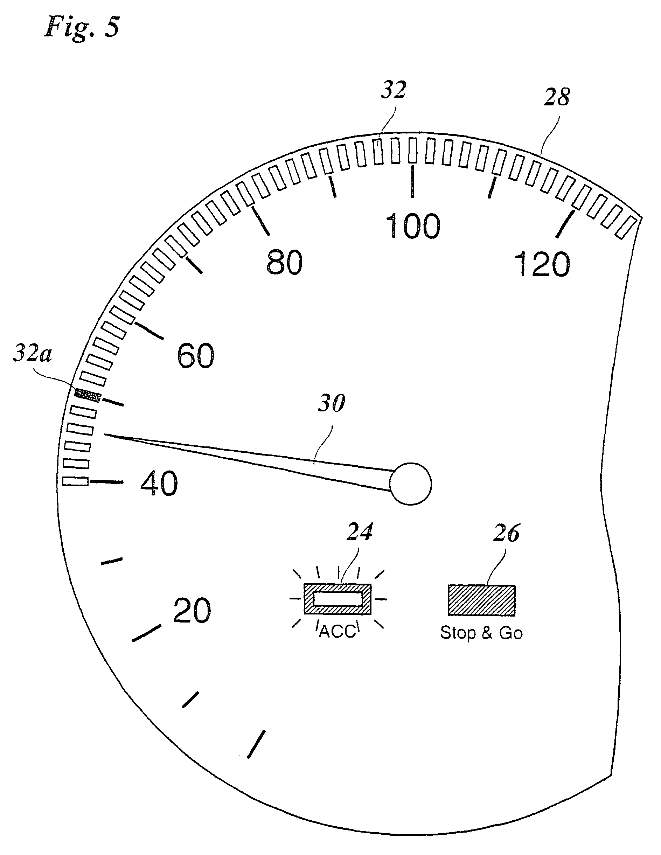

Figur 5 zeigt einen Fahrgeschwindigkeitsanzeiger 28, wie er üblicherweise auf dem Armaturenbrett eines Kraftfahrzeugs angeordnet ist. Der Fahrgeschwindigkeitsanzeiger 28 weist wie üblich eine Geschwindigkeitsskala und eine Tachonadel 30 auf und enthält auch die bereits erwähnten Anzeigelampen 24 und 26 für die ACC-Funktion und die Stop & Go-Funktion.

Das gezeigte Beispiel illustriert die Situation zum Zeitpunkt t₀ in Figur 3. Die aktuelle Fahrgeschwindigkeit beträgt 46 km/h, und sie liegt damit zwischen der Geschwindigkeit V₁ von 40 km/h und der Geschwindigkeit V₂ von 50 km/h, so daß sowohl der ACC-Modus als auch der Stop & Go-Modus aktiv sein könnten. Hier ist der Stop & Go-Modus aktiv, so daß die Anzeigelampe 26 voll eingeschaltet ist, während bei der Anzeigelampe 24 nur ein Rahmen aufleuchtet. Hierdurch wird angezeigt, daß der ACC-Modus zwar aktivierbar aber nicht aktiv ist. Die Umschaltaufforderung kann nun beispielsweise darin bestehen, daß der Rahmen der Anzeigelampe 24 zu blinken anfängt, wie in Figur 5 symbolisch dargestellt ist.

Zu der Anzeigeeinrichtung des Geschwindigkeitsreglers gehört weiterhin eine Vielzahl von Leuchtdioden 32, die in dem Geschwindigkeitsbereich ab 40 km/h gleichmäßig mit einer Auflösung von 2 km/h über die Geschwindigkeitsskala verteilt sind. Das Aufleuchten einer dieser Leuchtdioden 32 gibt die Wunschgeschwindigkeit an, die mit Hilfe einer der Tasten 16, 18 gesetzt wurde. Da jedoch nicht die ACC-Funktion, sondern die Stop & Go-Funkcion aktiv ist, steigt die Fahrzeuggeschwindigkeit auch dann nicht über 50 km/h (V₂) an, wenn die Verkehrssituation höhere Geschwindigkeiten zuläßt. Das heißt, sofern keine Abstandsregelung erforderlich ist, wird auf eine Sollgeschwindigkeit von 50 km/h geregelt. Dadurch, daß die der Sollgeschwindigkeit von 50 km/h entsprechende Leuchtdiode 32a aufleuchtet wird angezeigt, daß die Geschwindigkeit im Stop & Go Modus auf diesen Wert begrenzt ist. Wahlweise kann die Umschaltaufforderung auch in einem Blinken der Leuchtdiode 32a bestehen. Die zusätzliche Ausgabe eines kurzen Signaltons ist zweckmäßig.

## Patentansprüche

1. Verfahren zur Geschwindigkeits- und Abstandsregelung bei Kraftfahrzeugen, bei dem der Abstand eines vorausfahrenden Fahrzeugs gemessen wird und für die Abstandsregelung mindestens zwei Betriebsmodi vorgesehen sind, die in verschiedenen, einander überlappenden Geschwindigkeitsbereichen aktivierbar sind, und bei dem die Umschaltung zwischen diesen Betriebsmodi zumindest in einer Richtung nur durch einen Fahrerbefehl möglich ist, **dadurch gekennzeichnet, daß** die Geschwindigkeit (Vᵥ) des vorausfahrenden Fahrzeugs anhand der Geschwindigkeit (Vₑ) des eigenen Fahrzeugs und der gemessenen Abstands- und/oder Relativgeschwindigkeitsdaten (Vᵣ) in die Zukunft extrapoliert wird und daß eine Umschaltaufforderung an den Fahrer ausgegeben wird, wenn die extrapolierte Geschwindigkeit (V_{z}) außerhalb des zulässigen Bereichs für den aktuellen Modus liegt und die aktuelle Geschwindigkeit (Vₑ) innerhalb des zulässigen Bereichs für einen anderen Modus liegt.

2. Verfahren nach Anspruch 1, **dadurch gekennzeichnet, daß** einer der beiden Betriebsmodi ein Geschwindigkeits- und Abstandsregelmodus ist, der nur oberhalb einer unteren Grenzgeschwindigkeit (V₁) aktivierbar ist, und daß der andere Betriebsmodus ein Stop & Go Modus ist, der nur unterhalb einer oberen Grenzgeschwindigkeit (V₂) aktivierbar ist.

3. Verfahren nach Anspruch 2, **dadurch gekennzeichnet, daß** die Umschaltaufforderung ausgegeben wird, wenn die extrapolierte Geschwindigkeit (V_{z}) oberhalb eines Schwellenwertes liegt, der mindestens gleich der oberen Grenzgeschwindigkeit (V₂) ist, und wenn die aktuelle Geschwindigkeit (Vₑ) des Fahrzeugs oberhalb der unteren Grenzgeschwindigkeit (V₁) liegt.

4. Verfahren nach einem der vorstehenden Ansprüche, **dadurch gekennzeichnet, daß** die extrapolierte Geschwindigkeit (V_{z}) anhand der Absolutgeschwindigkeit (Vᵥ) des vorausfahrenden Fahrzeugs bestimmt wird.

5. Verfahren nach Anspruch 4, **dadurch gekennzeichnet, daß** die Absolutgeschwindigkeit (Vᵥ) des vorausfahrenden Fahrzeugs anhand der Beschleunigung (aᵥ) dieses Fahrzeugs extrapoliert wird.

6. Steuereinrichtung zur Geschwindigkeits- und Abstandsregelung bei Kraftfahrzeugen zur Durchführung des Verfahrens gemäß Anspruch 1, **dadurch gekennzeichnet,**
**dass** der Steuereinrichtung (12) Meßdaten bezüglich mindestens der Größen Abstand und Relativgeschwindigkeit eines vorausfahrenden Fahrzeugs von einem Abstandssensor sowie der Geschwindigkeit des eigenen Fahrzeugs zuführbar sind,
**daß** der Steuereinrichtung mindestens ein Signal von mindestens einem Bedienelement, das durch den Fahrer bedienbar ist, zuführbar ist, das die Umschaltung zwischen mindestens zwei Betriebsmodi repräsentiert
**daß** in der Steuereinrichtung (12) Mittel vorgesehen sind, die die Geschwindigkeit (Vᵥ) des vorausfahrenden Fahrzeugs anhand der Geschwindigkeit (Vₑ) des eigenen Fahrzeugs und
der gemessenen Abstands- und/oder Relativgeschwindigkeitsdaten (Vᵣ) in die Zukunft extrapoliert und
**daß** Mittel vorgesehen sind, mit denen an den Fahrer eine Umschaltaufforderung ausgebbar ist, wenn die extrapolierte Geschwindigkeit (V_{z}) außerhalb des zulässigen Bereichs für den aktuellen Modus liegt und die aktuelle Geschwindigkeit (Vₑ) innerhalb des zulässigen Bereichs für einen anderen Modus liegt.

7. Vorrichtung nach Anspruch 6, **dadurch gekennzeichnet, dass** der Abstandssensor (10) ein Radarsensor ist.

## Claims

1. Method for cruise control and regulating inter-vehicle distance in motor vehicles, in which the distance between the vehicle travelling ahead is measured and at least two operating modes are provided for the regulation of inter-vehicle distance, which modes can be activated in different overlapping velocity ranges, and in which it is possible to switch over between these operating modes at least in one direction only by means of a driver instruction, **characterized in that** the velocity (Vᵥ) of the vehicle travelling ahead is extrapolated into the future by reference to the velocity (Vₑ) of the driver's own vehicle and the measured inter-vehicle distance data and/or relative velocity data (Vᵣ), and **in that** a switch-over request is issued to the driver if the extrapolated velocity (V_{z}) lies outside the admissible range for the current mode, and the current velocity (Vₑ) lies within the admissible range for a different mode.

2. Method according to Claim 1, **characterized in that** one of the two operating modes is a velocity and inter-vehicle distance regulating mode which can be activated only above a lower limiting velocity (V₁), and **in that** the other operating mode is a stop & go mode which can be activated only below an upper limiting velocity (V₂).

3. Method according to Claim 2, **characterized in that** the switch-over request is issued if the extrapolated velocity (V_{z}) lies above a threshold value which is at least equal to the upper limiting velocity (V₂) and if the current velocity (Vₑ) of the vehicle lies above the lower limiting velocity (V₁).

4. Method according to one of the preceding claims, **characterized in that** the extrapolated velocity (V_{z}) is determined by reference to the absolute velocity (Vᵥ) of the vehicle travelling ahead.

5. Method according to Claim 4, **characterized in that** the absolute velocity (Vᵥ) of the vehicle travelling ahead is extrapolated by reference to the acceleration (aᵥ) of this vehicle.

6. Control device for cruise control and regulating the inter-vehicle distance in motor vehicles for carrying out the method according to Claim 1, **characterized in that** measurement data relating to at least the variables inter-vehicle distance and relative velocity of a vehicle travelling ahead can be fed to the control device (12) from an inter-vehicle distance sensor and the velocity of the driver's own vehicle, **in that** at least one signal from at least one operator control element which can be operated by the driver can be fed to the control device - said signal representing the switching over between at least two operating modes, **in that** means which extrapolate into the future the velocity (Vᵥ) of the vehicle travelling ahead by reference to the velocity (Vₑ) of the driver's own vehicle and the measured inter-vehicle distance and/or relative velocity data (Vᵣ) are provided in the control device (12), and **in that** means are provided with which a switch-over request can be issued to the driver if the extrapolated velocity (V_{z}) lies outside the admissible range for the current mode, and the current velocity (Vₑ) lies inside the admissible range for another mode.

7. Device according to Claim 6, **characterized in that** the inter-vehicle distance sensor (10) is a radar sensor.

## Revendications

1. Procédé de régulation de la vitesse et de la distance pour véhicules à moteur, selon lequel on mesure la distance d'un véhicule précédent, et dont la régulation de la distance comporte au moins deux modes de fonctionnement, qui peuvent être activés dans des plages de vitesse différentes se chevauchant mutuellement, la commutation au moins dans une direction, entre ces modes de fonctionnement n'étant possible que par un ordre du conducteur,
**caractérisé en ce que**
l'on extrapole dans le futur la vitesse (Vᵥ) du véhicule précédent à l'aide de la vitesse (Vₑ) du véhicule propre et des données mesurées de distance et/ou de vitesse relative (Vᵣ), on adresse une demande de commutation au conducteur lorsque la vitesse extrapolée (V_{z}) se situe hors de la plage autorisée pour le mode actuel et si la vitesse actuelle (Vₑ) se situe à l'intérieur de la plage autorisée pour un autre mode.

2. Procédé selon la revendication 1,
**caractérisé en ce qu'**
un des deux modes de fonctionnement est un mode de régulation de la vitesse et de la distance, qui ne peut être activé qu'au-dessus d'une vitesse limite inférieure (V₁), et l'autre mode de fonctionnement est un mode "Stop & Go", qui ne peut être activé qu'en dessous d'une vitesse limite supérieure (V₂).

3. Procédé selon la revendication 2,
**caractérisé en ce que**
la demande de commutation est émise lorsque la vitesse extrapolée (V_{z}) se situe au-delà d'une valeur de seuil, qui est au moins égale à la vitesse limite supérieure (V₂), et lorsque la vitesse actuelle (Vₑ) du véhicule se situe au-dessus de la vitesse limite inférieure (V₁).

4. Procédé selon l'une quelconque des revendications précédentes,
**caractérisé en ce que**
la vitesse extrapolée (V_{z}) est déterminée à l'aide de la vitesse absolue (Vᵥ) du véhicule précédent.

5. Procédé selon la revendication 4,
**caractérisé en ce que**
la vitesse absolue (Vᵥ) du véhicule précédent est extrapollée à l'aide de l'accélération (aᵥ) de ce véhicule.

6. Dispositif de commande de régulation de la vitesse et de la distance pour des véhicules à moteur, mettant en oeuvre du procédé selon la revendication 1,
**caractérisé en ce que**
des données de mesure concernant au moins les grandeurs distance et vitesse relative d'un véhicule précédent émanant d'un capteur de distance, ainsi que la vitesse du véhicule propre, peuvent être transmises au dispositif de commande (12), au moins un élément de commande, qui peut être actionné par le conducteur, peut émettre et transmettre au dispositif de commande, un signal qui représente la commutation entre au moins deux modes de fonctionnement, dans le dispositif de commande (12) des moyens extrapolent dans le futur la vitesse (Vᵥ) du véhicule précédent à l'aide de la vitesse (Vₑ) du véhicule propre et des données mesurées de distance et/ou de vitesse relative (Vᵣ), et des moyens sont prévus pour adresser au conducteur une demande de commutation lorsque la vitesse extrapolée (V_{z}) se situe hors de la plage autorisée pour le mode actuel et si la vitesse actuelle (Vₑ) se situe à l'intérieur de la plage autorisée pour un autre mode.

7. Dispositif selon la revendication 6,
**caractérisé en ce que**
le capteur de distance (10) est un radar.
